(19) Europäisches Patentamt / European Patent Office / Office européen des brevets

(11) **EP 2 026 045 A2**

(12) **DEMANDE DE BREVET EUROPEEN**

(43) Date de publication:
**18.02.2009 Bulletin 2009/08**

(51) Int Cl.:
*G01F 23/24* (2006.01)       *C23F 13/02* (2006.01)
*F24H 9/20* (2006.01)       *G05D 9/12* (2006.01)

(21) Numéro de dépôt: **08290715.5**

(22) Date de dépôt: **21.07.2008**

(84) Etats contractants désignés:
**AT BE BG CH CY CZ DE DK EE ES FI FR GB GR HR HU IE IS IT LI LT LU LV MC MT NL NO PL PT RO SE SI SK TR**
Etats d'extension désignés:
**AL BA MK RS**

(30) Priorité: **01.08.2007 FR 0705639**

(71) Demandeur: **Atlantic Industrie**
**85000 La Roche sur Yon (FR)**

(72) Inventeur: **Girard, Wielfried**
**85170 Saligny (FR)**

(74) Mandataire: **Kaspar, Jean-Georges**
**Brema-Loyer**
**161, rue de Courcelles**
**75017 Paris (FR)**

(54)    **Dispositif de détermination d'une quantité d'eau chaude restante**

(57)    Un dispositif de détermination d'une quantité d'eau chaude restante dans un conteneur, par exemple dans une cuve 1 de chauffe-eau comporte des moyens de régulation de tension entre une électrode (5a) isolée par rapport à la cuve 1 du chauffe-eau et cette cuve 1. Une mesure V de paramètres physiques représentatifs de la conductivité électrique globale du contenu du conteneur est effectuée pour déterminer la quantité d'eau chaude restante dans le conteneur.

EP 2 026 045 A2

## Description

L'invention est relative à un dispositif de détermination d'une quantité d'eau chaude restante dans un conteneur, notamment dans une cuve de chauffe-eau électrique à accumulation.

Dans les cuves de chauffe-eau électrique, l'interface entre l'eau chaude et l'eau froide, habituellement appelée « miroir » par les gens du métier, s'étend sur une hauteur de 3 à 4 centimètres et se propage vers le haut lorsqu'on soutire l'eau chaude à des fins sanitaires ou domestiques.

Compte tenu de la stratification thermique de l'eau dans les cuves de chauffe-eau, l'utilisateur ne peut pas prévoir à l'avance si la quantité d'eau chaude restante est suffisante pour une application donnée.

Un premier but de l'invention est de fournir à un utilisateur une indication relative à la quantité d'eau chaude restante dans un chauffe-eau, pour lui permettre ou non de mettre en service le chauffe-eau en marche forcée, en dehors des heures creuses de distribution électrique.

Un deuxième but de l'invention est de fournir une détermination d'une quantité d'eau chaude restante dans le chauffe-eau, à des fins statistiques en vue de la maintenance ou de l'enregistrement de données de consommation.

L'invention a pour objet un dispositif de détermination d'une quantité d'eau chaude restante dans un conteneur, notamment dans un chauffe-eau, caractérisé par des moyens de détermination de paramètres physiques représentatifs d'une conductivité électrique globale du contenu du conteneur.

Selon d'autres caractéristiques alternatives de l'invention :

- lesdits moyens de détermination comprennent une anode isolée électriquement par rapport au conteneur.

- l'anode isolée électriquement par rapport au conteneur est placée à l'intérieur du conteneur en position basse.

- l'anode isolée électriquement par rapport au conteneur est placée à l'intérieur du conteneur en position médiane.

- l'anode isolée électriquement par rapport au conteneur est placée à l'intérieur du conteneur en position haute.

- lesdits moyens de détermination comprennent un moyen de régulation de tension et une alimentation électrique continue.

- lesdits moyens de détermination comprennent un moyen de mesure d'un courant continu représentatif de la conductivité électrique globale de l'eau contenue dans le conteneur.

- le moyen de mesure d'un courant continu représentatif comporte un voltmètre et une résistance.

- le dispositif comporte des moyens de modélisation reliés à des moyens de commande de chauffage de l'eau contenue dans le conteneur.

- l'anode isolée électriquement par rapport au conteneur est également utilisée en tant qu'anode de protection cathodique du conteneur.

L'invention sera mieux comprise grâce à la description qui va suivre donnée à titre d'exemple et non limitatif en référence aux dessins annexés dans lesquels :

La figure 1 représente schématiquement un dispositif selon l'invention appliquée à une cuve de chauffe-eau.

La figure 2 représente schématiquement un graphique illustrant la série de mesure correspondant à la mise en oeuvre d'un dispositif selon l'invention de la figure 1.

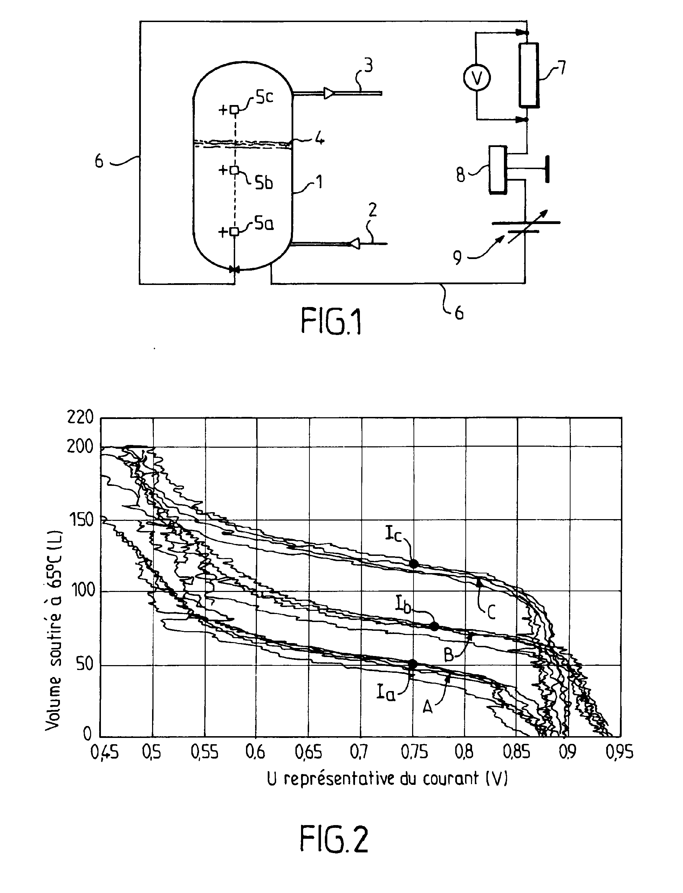

En référence à la figure 1, une cuve 1 de chauffe-eau comporte une entrée 2 d'eau froide et une sortie 3 d'eau réchauffée.

Le « miroir » ou interface 4 sépare le bas de la cuve remplie d'eau froide du haut de la cuve remplie d'eau réchauffée ou chaude.

Cette interface ou « miroir » 4 se déplace vers le haut lors du soutirage de l'eau chaude par la sortie 3 d'eau chaude.

Selon l'invention, pour déterminer la quantité d'eau chaude restante dans le chauffe-eau, on effectue une mesure de paramètres physiques représentatifs de la conductivité électrique du volume d'eau total contenu dans le chauffe-eau.

Lorsque la température de l'eau augmente, sa conductivité électrique augmente.

On mesure la résistance apparente de l'eau contenue dans la cuve 1 de chauffe-eau par application d'une tension entre la cuve 1 et un point 5 intérieur à la cuve et isolé électriquement de celle-ci.

On peut ainsi mesurer les propriétés de l'eau à l'intérieur du chauffe-eau lié à la conductivité globale, donc à la température moyenne intérieure du chauffe-eau, d'où l'on peut déduire une estimation de la quantité d'eau chaude restante.

A cet effet, selon l'invention, on utilise une anode 5 intérieure à la cuve du chauffe-eau.

L'anode 5 constitue une partie d'un circuit électrique comportant une liaison filaire 6, une résistance 7, par exemple d'environ 100 ohms, un régulateur 8 de tension stabilisée, par exemple à une valeur de 5 volts et une alimentation 9 en courant continu.

Le circuit électrique ainsi défini est branché entre la cuve 1 de chauffe-eau et l'anode 5 de mesure.

Pour effectuer des essais, on a déplacé l'anode 5 successivement dans la position 5a, 5b, ou 5c.

Lorsque l'anode 5 de mesure est positionnée dans la position 5a, on peut utiliser comme anode 5 de mesure une anode généralement utilisée pour assurer la protection cathodique de la cuve 1 de chauffe-eau : en effet, les anodes de protection cathodique sont généralement montées isolées par rapport à la cuve de chauffe-eau.

Dans les trois figurations d'anodes de mesure 5a, 5b ou 5c, on effectue une mesure de tension aux bornes de la résistance 7 grâce à un voltmètre V.

La tension mesurée par le voltmètre V est représentatif du courant établi dans le circuit, et par conséquent de la conductivité apparente de l'eau contenue dans le chauffe-eau.

Bien que le courant du circuit ne dépende pas uniquement de la température de l'eau de la cuve 1, l'influence de la résistance propre de la cuve est négligeable par rapport à l'influence de température de l'eau de la cuve.

En référence à la figure 2, un graphique représente des ensembles A, B, C de courbes correspondant aux trois positions 5a, 5b, 5c d'une anode de mesure 5 décrite en référence à la figure 1.

Une courbe A présente un point d'inflexion $I_a$ qui correspond sensiblement au passage du « miroir » par l'anode 5a.

Cette courbe A présente une conductivité électrique maximale en l'absence de soutirage associé à une tension de 0,9 volts mesurée au bord de la résistance 7.

Au fur et à mesure du soutirage de l'eau chaude, la tension U diminue jusqu'à une valeur minimale proche de 0,45 volts.

Cette tension minimale est atteinte pour un volume de soutirage sensiblement égal au volume de la cuve, dans l'exemple représenté 150 litres.

La forme de la courbe A permet d'en calculer une approximation polynomiale sous forme d'un polynôme du troisième degré dont les coefficients de puissance impair sont négatifs et dont les coefficients de puissance paire ou nulle sont positifs.

A titre d'exemple, on a pu établir pour la position 5a de l'anode une équation du type :

$$\text{Volume} = -10769\ U^3 + 22701\ U^2 - 16053\ U + 3893.$$

Les courbes B correspondent à la position de l'anode 5b sensiblement à mihauteur de la cuve.

Une courbe B présente un point d'inflexion $I_b$ correspondant au passage du « miroir » par l'anode 5b de mesure.

On constate que le point d'inflexion $I_b$ est obtenu pour un volume soutiré de 75 litres, c'est-à-dire la moitié du volume de la cuve 1 de contenance 150 litres.

La valeur de la tension U en abscisses correspondant à un soutirage nul est de 0,93 volts.

Le décalage entre les courbes A et B peut résulter de l'influence d'une résistance de contact avec la cuve 1.

La courbe B peut également être approximée par une fonction polynomiale du 3ème degré, dans laquelle le coefficient de $U^3$ est négatif, le coefficient de $U^2$ est positif, le coefficient de U est négatif et le terme constant restant est positif

Les courbes C correspondent à la position 5c de l'anode de mesure, c'est-à-dire dans le haut de la cuve, à une distance du sommet du chauffe-eau correspondant au rayon de la calotte bombée.

Le point d'inflexion Ic correspondant au passage du « miroir » par l'anode 5c est obtenu pour un volume de soutirage de 120 litres, soit 80 % de la contenance de la cuve 1.

La courbe C est plus aplatie que les courbes A et B, ce qui fournit une meilleure indication à l'utilisateur du chauffe-eau sur le volume d'eau chaude restant dans le chauffe-eau.

L'indication ainsi fournie peut être couplée à un moyen de commande qui provoque un réenclenchement automatique du chauffage, même en dehors des heures creuses si l'utilisateur le demande.

L'invention décrite en référence à plusieurs modes de réalisation n'y est nullement limitée, mais couvre au contraire toute modification de forme et toute variante de réalisation dans le cadre de l'esprit des revendications annexées.

**Revendications**

1. Dispositif de détermination d'une quantité d'eau chaude restante dans un conteneur, notamment dans un chauffe-eau, **caractérisé par** des moyens (5-9) de détermination de paramètres physiques représentatifs d'une conductivité électrique globale du contenu du conteneur (1).

2. Dispositif selon la revendication 1, **caractérisé par le fait que** lesdits moyens (5-9) de détermination comprennent une anode (5) isolée électriquement par rapport au conteneur (1).

3. Dispositif selon la revendication 2, **caractérisé par le fait que** l'anode (5) isolée électriquement par rapport au conteneur (1) est placée à l'intérieur du conteneur (1) en position basse (5a).

4. Dispositif selon la revendication 2, **caractérisé par le fait que** l'anode (5) isolée électriquement par rapport au conteneur (1) est placée à l'intérieur du conteneur (1) en position médiane (5b).

5. Dispositif selon la revendication 2, **caractérisé par le fait que** l'anode (5) isolée électriquement par rapport au conteneur (1) est placée à l'intérieur du conteneur (1) en position haute (5c).

6. Dispositif selon la revendication 1 ou la revendication 2, **caractérisé par le fait que** lesdits moyens (5-9) de détermination comprennent un moyen de régulation (8) de tension et une alimentation (9) électrique continue.

7. Dispositif selon la revendication 1 ou la revendication 2, **caractérisé par le fait que** lesdits moyens (5-9) de détermination comprennent un moyen de mesure (7, V) d'un courant continu représentatif de la conductivité électrique globale de l'eau contenue dans le conteneur (1).

8. Dispositif selon la revendication 7, **caractérisé par le fait que** le moyen de mesure (7, V) d'un courant continu représentatif comporte un voltmètre (V) et une résistance (7).

9. Dispositif selon la revendication 1, **caractérisé par le fait que** le dispositif comporte des moyens de modélisation reliés à des moyens de commande de chauffage de l'eau contenue dans le conteneur (1).

10. Dispositif selon la revendication 2, **caractérisé par le fait que** l'anode (5) isolée électriquement par rapport au conteneur (1) est également utilisée en tant qu'anode de protection cathodique du conteneur (1).

FIG.1

FIG.2